# EUROPÄISCHE PATENTANMELDUNG

(11) **EP 0 966 140 A2**
(43) Veröffentlichungstag der Anmeldung: **22.12.1999**
(21) Anmeldenummer: 99106763.8
(22) Anmeldetag: 03.04.1999
(51) Int. Cl.: H04M 3/42, H04M 11/06, H04Q 11/04

(54) **Telekommunikationsanlage**

(30) Priorität: 19.06.1998 DE 19827376
(71) Anmelder: ROBERT BOSCH GMBH, 70442 Stuttgart (DE)
(72) Erfinder: Haack, Reiner, 55452 Ruemmelsheim (DE)

(57) **Zusammenfassung**

Bei einer Telekommunikationsanlage mit einer Mehrzahl von Telefonie-Endgeräten (3) und einer Telefonie-Vermittlungsanlage (1) zur Steuerung des Telefonverkehrs zwischen den Telefonie-Endgeräten (3) untereinander und den Telefonie-Endgeräten (3) und einem Telekommunikations-Festnetz, wobei die Telefonie-Endgeräte (3) durch angeschlossene Computer (1) bedienbar ausgebildet sind, läßt sich die Fernbedienung der Telefonie-Endgeräte (3) ohne zusätzlichen Verbindungsaufwand unter Ausnutzung einer regelmäßig vorhandenen Datenverbindung (CTI-Link) ohne Einbußen der Funktionalität dadurch erreichen, daß der Bediensignale für ein Telefonie-Endgerät (3) abgebende Computer (2) über eine Datenverbindung (CTI-Link) mit der Telefonie-Vermittlungsanlage (1) verbunden ist, daß die Telefonie-Vermittlungsanlage (1) so eingerichtet ist, daß sie auf einem Datenkanal der Datenverbindung (CTI-Link) eingehendes Bediensignale in einen zu den Telefonie-Endgeräten (3) führenden Telefonie-Kanal umsetzt und daß die Telefonie-Endgeräte (3) mit den über den Telefonie-Kanal übermittelten Bediensignalen bedienbar ausgebildet sind.

## Beschreibung

Die Erfindung betrifft eine Telekommunikationsanlage mit einer Mehrzahl von Telefonie-Endgeräten und einer Telefonie-Vermittlungsanlage zur Steuerung des Telefonverkehrs zwischen den Telefonie-Endgeräten untereinander und den Telefonie-Endgeräten und einem Telekommunikations-Festnetz, wobei die Telefonie-Endgeräte durch angeschlossene Computer bedienbar ausgebildet sind.

An Telekommunikations-Festnetze werden zunehmend Telekommunikationsanlagen angeschlossen, die eine eigene zentrale Vermittlungsanlage aufweisen, an die ihrerseits wieder eine Vielzahl von Telefonie-Endgeräten anschließbar sind. Die Telefonie-Vermittlungsanlagen steuern die Verbindungen von eingehenden Anrufen mit den gewünschten Telefonie-Endgeräten und die Verbindungen der Telefonie-Endgeräte untereinander. Hierzu kommunizieren die Telefonie-Endgeräte mit der Telefonie-Vermittlungsanlage über einen Telefonie-Kanal. Es besteht häufig ein Bedürfnis, das Telefonie-Endgerät nicht gesondert bedienen zu müssen, insbesondere wenn während eines Telefonats Daten in einen Computer eingegeben und ggfs. aus dem Computer abgerufen werden, wie dies beispielsweise bei telefonischen Auskunftsdiensten oder telefonischen Bestellannahmen der Fall ist.

In diesem Fall ist es zweckmäßig, gewisse Bedienoperationen für das Telefonie-Endgerät über den Computer selbst durchzuführen, wie beispielsweise das Umlegen eines angekommenen Anrufs, die Einrichtung einer Konferenzschaltung, das Einschalten einer Freisprecheinrichtung usw. Hierfür ist es bekannt, das Telefonie-Endgerät mit einer Computer-Schnittstelle zu versehen, um durch den Computer auf das Telefonie-Endgerät Bediensignale überspielen zu können, die vom Mikroprozessor des Telefonie-Endgeräts ausgewertet werden.

An die Telefonie-Vermittlungsanlage werden üblicherweise außer den Telefonie-Endgeräten auch Computer angeschlossen. Hierzu existiert ein entsprechender Bus, der als CTI-Link (CTI: Computer Telephone Interface) bezeichnet wird. Auf einem so gebildeten Datenkanal kann eine Kommunikation zwischen dem Computer und der Telefonie-Vermittlungsanlage stattfinden, um beispielsweise eine Fax-Funktion des Computers zu realisieren und einen Nachrichtenaustausch mittels Daten unmittelbar über das Telekommunikations-Festnetz vorzunehmen. Grundsätzlich wäre es denkbar, über die Computer, die über den Datenkanal mit der Telefonie-Vermittlungsanlage verbunden sind, auch Steuerungen unmittelbar durch die Telefonie-Vermittlungsanlage ausführen zu lassen, die ansonsten durch die manuelle Betätigung an den Telefonie-Endgeräten ausgelöst werden. Hierdurch entsteht allerdings der Nachteil, daß der Mikroprozessor des von der Steuerung betroffenen Telefonie-Endgeräts keine Information über die von der Telefonie-Vermittlungsanlage aufgrund der Steuersignale des Computers vorgenommenen Änderung der jeweiligen Konfiguration erhält, so daß geänderte Konfigurationen in den Telefonie-Endgeräten als Störungen erkannt werden und zu einer Unterbrechung der hergestellten Verbindung führen können.

Die Fernbedienung eines Telefonie-Endgeräts durch einen Computer kann daher in den bekannten Lösungen nur dadurch erfolgen, daß der Computer unmittelbar an das Telefonie-Endgerät angeschlossen wird. Diese Lösung weist die Nachteile eines gesonderten Verbindungsaufwandes und einer nicht vollwertigen Funktion des Telefonie-Endgeräts bei einer Fernbedienung auf. Beispielsweise wird im Display eines Telefonie-Endgeräts eine Funktionsanzeige nur bei einer manuellen Betätigung, nicht jedoch bei einer Fernbedienung mittels eines Computers vorgenommen.

Der Erfindung liegt somit die Problemstellung zugrunde, eine einfach zu realisierende Fernbedienung eines Telefonie-Endgeräts mittels eines Computers mit einer vollen Funktion des Telefonie-Endgeräts wie bei einer manuellen Bedienung zu ermöglichen.

Ausgehend von dieser Problemstellung ist erfindungsgemäß eine Telekommunikationsanlage der eingangs erwähnten Art dadurch gekennzeichnet, daß der Bediensignale für ein Telefonie-Endgerät abgebende Computer über eine Datenverbindung mit der Telefonie-Vermittlungsanlage verbunden ist, daß die Telefonie-Vermittlungsanlage so eingerichtet ist, daß sie auf einem Datenkanal der Datenverbindung eingehende Bediensignale in einen zu den Telefonie-Endgeräten führenden Telefonie-Kanal umsetzt und daß die Telefonie-Endgeräte mit den über den Telefonie-Kanal übermittelten Bediensignalen bedienbar ausgebildet sind.

Durch die vorliegende Erfindung wird der in einer herkömmlichen Telekommunikationsanlage regelmäßig vorhandene Bus zum Anschluß von Computern an die Telefonie-Vermittlungsanlage (CTI-Link) ausgenutzt, um auch Bediensignale zur Telefonie-Vermittlungsanlage (auf dem B-Kanal) zu übermitteln. Die Telefonie-Vermittlungsanlage setzt die erhaltenen Bediensignale lediglich zur Übermittlung in dem Telefonie-Kanal (D-Kanal) um und überträgt die Bediensignale im übrigen unverändert auf die Telefonie-Endgeräte. Somit erhalten die Telefonie-Endgeräte ihre Bediensignale über den Telefonie-Kanal, so daß displayfähige Telefonie-Endgeräte auch bei der Steuerung durch einen Computer stets eine korrekte Display-Signalisierung haben. Die Erfindung bietet ferner den Vorteil, daß sich das Telefonie-Endgerät auch bei einer Fernsteuerung durch einen Computer in einem Zustand befindet, der dem bei manueller Bedienung entspricht, so daß während eines vermittlungstechnischen Vorganges ein Mischbetrieb zwischen Fernbedienung und manueller Steuerung durchgeführt werden kann.

In der Telefonie-Vermittlungsanlage ist lediglich der Transport der Bediensignale zum Telefonie-Endgerät zu realisieren. Der verimittlungstechnische Meldungsverkehr zwischen dem Telefonie-Endgerät und der Telefonie-Vermittlungsanlage ist identisch mit dem bei manueller Bedienung. Durch die Ausnutzung des CTI-Links und die Steuerung durch das Telefonie-Endgerät selbst aufgrund der vom Telefonie-Endgerät von der Telefonie-Vermittlungsanlage erhaltenen Signale entfällt für die Fernbedienung die sonst erforderliche zusätzliche Hardware, insbesondere in Form von Verbindungsleitungen.

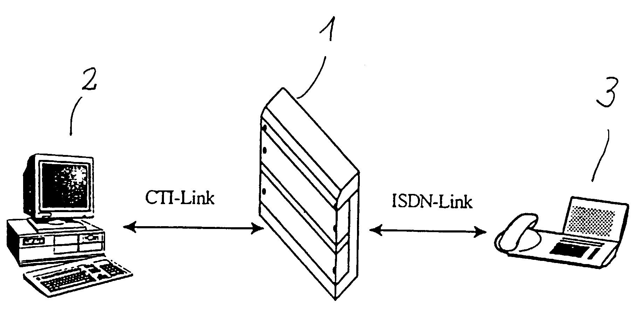

Die beigefügte Zeichnung zeigt eine Telefonie-Vermittlungsanlage 1, die in an sich bekannter Weise über ein CTI-Link mit einem Computer 2, regelmäßig in Form eines Personal-Computers, verbunden ist. Der CTI-Link stellt eine Datenverbindung dar, über die Daten übermittelt werden, die in der Telefonie-Vermittlungsanlage im B-Kanal verarbeitet werden.

Die Telefonie-Vermittlungsanlage 1 ist ferner mit Telefonie-Endgeräten 3 verbunden, von denen in der Zeichnung nur 1 dargestellt ist. Die Verbindung erfolgt über einen Telefonie-Kanal (Kanal B), der im ISDN-System in einem ISDN-Link existiert.

Erfindungsgemäß werden Bediensignale von dem Computer 2 zunächst zur Telefonie-Vermittlungsanlage 1 gesendet. Die Telefonie-Vermittlungsanlage 1 sendet die Bediensignale nach einer entsprechenden Umsetzung über eine interne ISDN-Schnittstelle und den ISDN-Link zum betreffenden Telefonie-Endgerät. Nach der Auswertung der Bediensignale initiiert das Telefonie-Endgerät 3 die zu dem Bediensignal gehörenden vermittlungstechnischen Aktionen über die Telefonie-Vermittlungsanlage 1.

Die vom Telefonie-Endgerät 3 aufgrund der Fernbedienung initiierten Aktionen entsprechen weitestgehend den beim manuellen Bedienen des Telefonie-Endgeräts durchgeführten Aktionen. Insbesondere sind die Display-Steuerung des Telefonie-Endgeräts 3 und der Meldungsverkehr zwischen dem Telefonie-Endgerät 3 und der Telefonie-Vermittlungsanlage 1 für die manuelle Bedienung und die erfindungsgemäß ausgeführte Fernbedienung identisch.

## Patentansprüche

1. Telekommunikationsanlage mit einer Mehrzahl von Telefonie-Endgeräten (3) und einer Telefonie-Vermittlungsanlage (1) zur Steuerung des Telefonverkehrs zwischen den Telefonie-Endgeräten (3) untereinander und den Telefonie-Endgeräten (3) und einem Telekommunikations-Festnetz, wobei die Telefonie-Endgeräte (3) durch angeschlossene Computer (1) bedienbar ausgebildet sind, dadurch gekennzeichnet, daß der Bediensignale für ein Telefonie-Endgerät (3) abgebende Computer (2) über eine Datenverbindung (CTI-Link) mit der Telefonie-Vermittlungsanlage (1) verbunden ist, daß die Telefonie-Vermittlungsanlage (1) so eingerichtet ist, daß sie auf einem Datenkanal der Datenverbindung (CTI-Link) eingehendes Bediensignale in einen zu den Telefonie-Endgeräten (3) führenden Telefonie-Kanal umsetzt und daß die Telefonie-Endgeräte (3) mit den über den Telefonie-Kanal übermittelten Bediensignalen bedienbar ausgebildet sind.
